# EUROPÄISCHE PATENTSCHRIFT

(11) **EP 2 639 080 B1**
(45) Veröffentlichungstag und Bekanntmachung des Hinweises auf die Patenterteilung: **12.11.2014**
(21) Anmeldenummer: 12159426.1
(22) Anmeldetag: 14.03.2012
(51) Int. Cl.: B60C 1/00, B60C 5/14, C08K 3/04, C08K 3/36, C08L 7/00, B60C 11/00, C08K 5/548

(54) **Fahrzeugluftreifen**
Pneumatic tyres for a vehicle
Pneus de véhicule

(43) Veröffentlichungstag der Anmeldung: 18.09.2013
(73) Patentinhaber: Continental Reifen Deutschland GmbH, 30165 Hannover (DE)
(72) Erfinder: Weber, Christian, 30826 Garbsen (DE)
(74) Vertreter: Fornefett, Iris

(56) Entgegenhaltungen:
- EP-A1- 0 708 136
- EP-A1- 1 988 120
- EP-A1- 2 151 476
- EP-A1- 2 371 580
- US-A1- 2007 137 745
- US-A1- 2007 144 642

## Beschreibung

Die Erfindung betrifft einen Fahrzeugluftreifen mit einer Radialkarkasse, einem Gürtel und einem Laufstreifen, welcher sich in radialer Richtung aus zwei aus unterschiedlichen Gummimischungen bestehenden Schichten, einer Laufstreifencap und einer Laufstreifenbase, zusammensetzt, wobei die Laufstreifencap den mit der Fahrbahn in Berührung kommenden Teil des Laufstreifens darstellt und die Laufstreifenbase zwischen Laufstreifencap und Gürtel angeordnet ist.

Es ist üblich, Fahrzeugluftreifen, und zwar sowohl Reifen für Personenkraftwagen als auch für Nutzfahrzeuge, mit einem zweiteiligen Laufstreifen zu versehen, welcher aus einer Laufstreifencap, die beim Abrollen des Reifens mit dem Untergrund in Kontakt tritt, und aus einer darunter zwischen Laufstreifencap und Gürtel angeordneten Laufstreifenbase besteht. Während die Laufstreifencap aus einer Gummimischung besteht, die insbesondere hinsichtlich des Abriebs optimiert ist, werden an die Gummimischung der Laufstreifenbase und an die der Gummimischung zu Grunde liegende Kautschukmischung andere Anforderungen gestellt.

Durch den Einsatz einer Laufstreifenbase soll der Rollwiderstand des Reifens reduziert werden, so dass die eingesetzte Mischung eine geringe Hysterese aufweisen sollte. Gleichzeitig muss die Kautschukmischung der Laufstreifenbase in vielen Fällen eine ausreichend hohe Klebrigkeit während des Reifenherstellungsprozesses aufweisen, damit der Laufstreifen am Reifenunterbau haften bleibt. Neben diesen Anforderungen muss bei der Laufstreifenbase auch eine ausreichende strukturelle Haltbarkeit gewährleistet sein. Ferner hat die Laufstreifenbase durch ihre Steifigkeit Einfluss auf das Handlingverhalten (Fahrverhalten auf der Straße) des Reifens.

Es ist bekannt, dass die oben genannten Anforderungen, wie geringe Hysterese, ausreichende Klebrigkeit, Steifigkeit und strukturelle Haltbarkeit, in einem Konflikt zueinander stehen und meist ein nur unbefriedigender Kompromiss gefunden werden kann, d.h. verbessert sich die eine Eigenschaft, so verschlechtert sich mindestens eine andere Eigenschaft. So verlangt beispielsweise die Anforderung "geringe Hysterese" eine Kautschukmischung mit geringem Füll- und hohem Vernetzungsgrad, was allerdings zu einer geringeren Rissbeständigkeit führt. Es besteht also ein Zielkonflikt zwischen der strukturellen Haltbarkeit (Rissbeständigkeit) und dem Rollwiderstand (Hysterese).

Kautschukmischungen für die Laufstreifenbase eines Fahrzeugluftreifens, die natürliches und/oder synthetisches Polyisopren, Kieselsäure und Ruß enthalten, werden z. B. in de WO 2012/004140 A1, der WO 2012/004038 A1 und der EP 2 257 423 B1 beschrieben.

Der Erfindung liegt die Aufgabe zugrunde, bei einem Reifen der eingangs genannten Art den Rollwiderstand zu senken und gleichzeitig andere Reifeneigenschaften und den Reifenbauprozess nicht negativ zu beeinflussen.

Gelöst wird die gestellte Aufgabe erfindungsgemäß dadurch, dass die Laufstreifenbase auf einer Kautschukmischung basiert, die
- mehr als 70 phr natürliches und/oder synthetisches Polyisopren und
- 21 bis 42 phr Kieselsäure und Ruß in Summe enthält, wobei das Verhältnis von Kieselsäure zu Ruß größer als 1:1 ist,
- und zumindest ein Kupplungsagens zur Anbindung der Kieselsäure an den Kautschuk und 0,5 bis 10 phr zumindest eines Klebharzes aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es hat sich überraschend herausgestellt, dass durch die Verwendung einer derartigen Kautschukmischung für die Laufstreifenbase ein Reifen erhalten werden kann, der sich durch einen verringerten Rollwiderstand auszeichnet. Gleichzeitig zeichnet sich die Mischung durch eine hohe Klebrigkeit aus, was für den Reifenaufbauprozess von Wichtigkeit ist. Ferner weist die Kautschukmischung für die Laufstreifenbase nach Vulkanisation eine hohe Rissbeständigkeit und Reißfestigkeit auf, was dem Reifen eine gute strukturelle Haltbarkeit verleiht.

Die Kautschukmischung für die Laufstreifenbase enthält mehr als 70 phr natürliches und/oder synthetisches Polyisopren (NR oder IR). Um die Haltbarkeit des Reifens weiter zu erhöhen, hat es sich als vorteilhaft erwiesen, wenn die Laufstreifenbase auf einer Kautschukmischung basiert, die mehr als 85 phr, bevorzugt mehr als 95 phr, natürliches und/oder synthetisches Polyisopren enthält. Derartige Kautschukmischungen zeigen eine verbesserte Rissbeständigkeit und Reißfestigkeit.

Die Kautschukmischung für die Laufstreifenbase kann neben natürlichem und/oder synthetischem Polyisopren noch weitere Kautschuke in Mengen bis zu 30 phr enthalten. Dabei kann es sich z. B. um solche Kautschuke handeln, die ausgewählt sind aus der Gruppe, bestehend aus Polybutadien, Styrol-Butadien-Copolymeren, Styrol-Isopren-Butadien-Terpolymeren, Butylkautschuk, Halobutylkautschuk und Ethylen-Propylen-DienKautschuk (EPDM), wobei die eingesetzten Kautschuke auch funktionalisiert sein können. Vorzugsweise enthält die Kautschukmischung für die Laufstreifenbase als weiteren Kautschuk Polybutadien.

Gemäß der Erfindung enthält die Kautschukmischung für die Laufstreifenbase 21 bis 42 phr Kieselsäure und Ruß in Summe. Bei Mengen von weniger als 21 oder mehr als 42 phr Kieselsäure und Ruß in Summe wurde festgestellt, dass die Rückprallelastizität bei 70 °C als Maß für den Rollwiderstand sich verschlechtert, so dass sich ein optimaler Bereich der Kieselsäure und Rußmenge für einen möglichst niedrigen Rollwiderstand des Fahrzeugluftreifens ergibt. Vorzugsweise enthält die Mischung für die Laufstreifenbase 26 bis 39 phr, besonders bevorzugt 28 bis 36 phr, Kieselsäure und Ruß in Summe für einen besonders niedrigen Rollwiderstand des Reifens.

Erfindungsgemäß ist das Verhältnis von Kieselsäure zu Ruß größer als 1:1. Dies ist wichtig für eine hohe Rissbeständigkeit und bewirkt, dass sowohl Rissinitiierung als auch Rissfortpflanzung verringert werden. Um die Rissbeständigkeit weiter zu verbessern, hat es sich als vorteilhaft erwiesen, wenn das Verhältnis von Kieselsäure zu Ruß größer als 3:2, vorzugsweise größer als 4:1, ist. Ruß kann demnach in den Mischungen enthalten sein, muss aber nicht.

Die Kautschukmischung für die Laufstreifenbase weist zumindest ein Kupplungsagens zur Anbindung der Kieselsäure an den Kautschuk auf. Kupplungsagenzien dienen der Verbesserung der Verarbeitbarkeit und der Anbindung des polaren Füllstoffes an den Kautschuk. Die Kupplungsagenzien, in der Regel so genannte Silan-Kupplungsagenzien, reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Kupplungsagenzien können dabei alle dem Fachmann für die Verwendung in Kautschukmischungen bekannten Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx-(mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Die Kupplungsagenzien werden in üblichen Mengen in der Kautschukmischung eingesetzt und werden der Menge der eingesetzten Kieselsäure angepasst.

Als Kieselsäuren können alle dem Fachmann für den Einsatz in Reifenkautschukmischungen bekannten Kieselsäuren verwendet werden. So kann es sich um solche Kieselsäuren handeln, die eine CTAB-Oberfläche (gemäß ASTM D 3765) von 30 bis 350 m²/g, vorzugsweise von 120 bis 250 m²/g, aufweisen. Als Kieselsäuren können sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Als Ruße können typische Reifenruße zum Einsatz kommen. Bevorzugt ist jedoch, wenn der Ruß eine DBP-Zahl gemäß ASTM D 2414 von mehr als 80 cm³/100g und eine Jodadsorptionszahl gemäß ASTM D 1510 von mehr als 60 g/kg aufweist. Es handelt sich dabei um so genannte Laufstreifenruße. Die Verwendung derartiger Rußes zeigt Vorteile hinsichtlich des Abriebverhaltens sowohl bei der seitlich offenliegenden Laufstreifenbase als auch des gesamten Laufstreifens, da über den Rücklauf während des Reifenherstellprozesses geringe Mengen des Rußes der Base in die Kautschukmischung der Cap gelangen. Reifenversuche haben gezeigt, dass schon derart geringe Mengen dazu führen, dass sich bei Verwendung von Rußen mit anderen als den oben genannten DBP- und Jodadsorptionszahlen der Abrieb deutlich verschlechtert.

Um die Steifigkeit der Kautschukmischung für die Laufstreifenbase und damit das Handlingverhalten des Reifens positiv zu beeinflussen, hat es sich als vorteilhaft erweisen, wenn die Laufstreifenbase auf einer Kautschukmischung basiert, die weniger als 10 phr Weichmacheröl und/oder Verarbeitungshilfsmittel enthält. Vorzugsweise werden für eine höhere Steifigkeit weniger als 5 phr Weichmacheröl und/oder Verarbeitungshilfsmittel eingesetzt. Als Weichmacher können z. B. Glyceride, Faktisse, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien) eingesetzt werden.

Gemäß der Erfindung basiert die Laufstreifenbase auf einer Kautschukmischung, die 0,5 bis 10 phr zumindest eines Klebharzes enthält. Diese Ausgestaltung der Erfindung ist besonders von Vorteil, wenn eine besonders hohe Klebrigkeit der Mischung im Bauprozess notwendig ist. Dies ist insbesondere der Fall, wenn auf eine zusätzliche klebrige Unterplatte zwischen Laufstreifenbase und Reifenunterbau verzichtet wird, d. h., Laufstreifenbase direkt auf den Reifenunterbau aufgelegt wird. Der Laufstreifen muss während des Herstellprozesses haften bleiben. Für ein besonders gutes Verhältnis von Klebrigkeit zu Rollwiderstand hat es sich als vorteilhaft erwiesen, wenn die Laufstreifenbase auf einer Kautschukmischung basiert, die 1 bis 4 phr zumindest eines Klebharzes enthält.

Als Klebharze können natürliche oder synthetische Harze, wie Kohlenwasserstoffharze, eingesetzt werden, die als Klebrigmacher wirken. Die Kohlenwasserstoffharze können phenolisch, aromatisch oder aliphatisch sein. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen, wobei Phenol-Harze für die vorliegende Erfindung besonders gut geeignet sind.

Neben den bereits genannten Inhaltsstoffen kann die Kautschukmischung für die Laufstreifenbase weitere übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der Kautschukmischung zugesetzt. Die Vulkanisation kann auch in Anwesenheit von sehr geringen Schwefelmengen in Kombination mit schwefelspendenden Substanzen erfolgen.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Um sowohl den Rollwiderstand als auch das Handlingverhalten des Fahrzeugluftreifens weiter zu verbessern, hat sich als vorteilhaft erwiesen, wenn die Laufstreifenbase auf einer Kautschukmischung basiert, die mehr als 2,4 phr zumindest eines Vulkanisationsbeschleunigers enthält. Daraus resultiert ein hoher Vernetzungsgrad der Kautschukmischung, was sich positiv auf die Rückprallelastizität bei 70 °C und die Steifigkeit der Mischung auswirkt.

Die Herstellung der Kautschukmischung für die Laufstreifenbase erfolgt nach den in der Kautschukindustrie üblichen Verfahren, bei denen zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt.

Die Fertigmischung wird z. B. durch einen Extrusionsvorgang weiterverarbeitet und mit entsprechenden Extrudern und Extrudermundstücken in die gewünschte Form einer Laufstreifenbase gebracht und bei der Herstellung des Fahrzeugreifenrohlings wie bekannt aufgelegt. Die Laufstreifenbase kann aber auch in Form eines schmalen Kautschukmischungsstreifens auf einen Reifenrohling aufgewickelt werden. Es besteht auch die Möglichkeit, dass die Laufstreifenbase neben der Kautschukmischung, die mehr als 70 phr natürliches und/oder synthetisches Polyisopren und 21 bis 42 phr Kieselsäure und Ruß in Summe enthält, wobei das Verhältnis von Kieselsäure zu Ruß größer als 1:1 ist, und zumindest ein Kupplungsagens zur Anbindung der Kieselsäure an den Kautschuk aufweist, auch noch andere Kautschukmischungen aufweist. Die Laufstreifenbase kann beispielsweise in axialer Richtung unterschiedliche Kautschukmischungen aufweisen. So kann die Base zentrale und seitliche Abschnitte aus unterschiedlichen Kautschukmischungen aufweisen.

Bei den erfindungsgemäßen Fahrzeugluftreifen kann es sich sowohl um PKW- als auch um Nutzfahrzeugreifen handeln.

Die Erfindung soll nun anhand von Vergleichs- und Ausführungsbeispielen, die in Tabelle 1 zusammengefasst sind, näher erläutert werden. Mischungen gemäß der Erfindung sind mit "E" gekennzeichnet, während die Vergleichsmischungen mit "V" gekennzeichnet sind. Bei sämtlichen in der Tabelle enthaltenen Mischungsbeispielen sind die angegebenen Mengenangaben Gewichtsteile, die auf 100 Gewichtsteile Gesamtkautschuk bezogen sind (phr). In den Mischungen wurden die Mengen an Kupplungsagens den Mengen an Kieselsäure angepasst.

Die Mischungsherstellung erfolgte unter üblichen, der Großproduktion ähnlichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) und 70°C gemäß DIN 53 505
- Rückprallelastizität bei Raumtemperatur (RT) und 70°C gemäß DIN 53 512
- Spannungswerte (Modul) bei 100 und 200 % Dehnung bei Raumtemperatur gemäß DIN 53 504
- dynamischer Speichermodul E' bei 55 °C gemäß DIN 53 513 bei 8% Dehnung
- Zugfestigkeit bei Raumtemperatur (RT) gemäß DIN 53 504
- Reißdehnung bei Raumtemperatur (RT) gemäß DIN 53 504
- Reißenergie bei Raumtemperatur (RT) gemäß DIN 53 448
- Weiterreißwiderstand nach Graves bei Raumtemperatur (RT) gemäß DIN 53 515

**Tabelle 1**

| **Bestandteile** | **Einheit** | **1(V)** | **2(E)** | **3(E)** | **4(E)** | **5(V)** | **6(E)** | **7(E)** | **8(V)** |
|---|---|---|---|---|---|---|---|---|---|
| Naturkautschuk | phr | 100 | 100 | 100 | 85 | 60 | 85 | 100 | 100 |
| Polybutadien | phr | 0 | 0 | 0 | 15 | 40 | 0 | 0 | 0 |
| SSBR^{a} | phr | 0 | 0 | 0 | 0 | 0 | 15 | 0 | 0 |
| Ruß N339 | phr | 31 | 12 | 5 | 5 | 5 | 5 | 0 | 0 |
| Kieselsäure^{b} | phr | 5 | 26 | 26 | 26 | 26 | 26 | 31 | 20 |
| Weichmacheröl | phr | 1,6 | 2,3 | 2 | 2 | 2 | 2 | 2 | 2,75 |
| Klebharz^{c} | phr | 1 | 1 | 1 | 1 | 1 | 1 | 1 | 1 |
| Zinkoxid | phr | 3 | 3 | 3 | 3 | 3 | 3 | 3 | 3 |
| Stearinsäure | phr | 1,5 | 1,5 | 1,5 | 1,5 | 1,5 | 1,5 | 1,5 | 1,5 |
| Verarbeitungshilfsmittel | phr | 1 | 1 | 1 | 1 | 1 | 1 | 1 | 1 |
| Alterungsschutzmittel | phr | 5 | 5 | 5 | 5 | 5 | 5 | 5 | 5 |
| Kupplungsagens^{d} | phr | 0,5 | 2,2 | 2,2 | 2,2 | 2,2 | 2,2 | 2,5 | 2,2 |
| Beschleuniger | phr | 2,4 | 3,1 | 4 | 4 | 4 | 4 | 4,2 | 5,0 |
| Schwefel | phr | 2,6 | 3 | 3,5 | 3,5 | 3,5 | 3,5 | 3,5 | 5,0 |

| **Eigenschaft** | **Einheit** | **1(V)** | **2(E)** | **3(E)** | **4(E)** | **5(V)** | **6(E)** | **7(E)** | **8(V)** |
|---|---|---|---|---|---|---|---|---|---|
| Härte bei RT | ShA | 57 | 57 | 55 | 58 | 61 | 58 | 55 | 40 |
| Härte bei 70°C | ShA | 56 | 57 | 56 | 59 | 61 | 58 | 55 | 43 |
| Rückprallelast. bei RT | % | 65 | 64 | 66 | 70 | 73 | 68 | 66 | 53 |
| Rückprallelast. b. 70°C | % | 78 | 78 | 81 | 81 | 81 | 81 | 81 | 72 |
| Modul 100% | MPa | 2,3 | 2,1 | 1,8 | 2,2 | 2,4 | 2,3 | 1,7 | 0,8 |
| Modul 200% | MPa | 6,8 | 6,1 | 5,0 | 6,0 | 5,9 | 6,4 | 4,7 | 1,4 |
| E' 55°C, 8% | MPa | 4,5 | 4,6 | 4,1 | 4,7 | 5,6 | 4,7 | 3,9 | 2,2 |
| Reißfestigkeit | MPa | 17 | 19 | 15 | 11 | 9 | 11 | 13 | 5 |
| Reißdehnung | % | 380 | 440 | 410 | 310 | 290 | 310 | 380 | 460 |
| Reißenergie | MJ/m³ | 3 | 3,2 | 3,1 | 2,6 | 2,3 | 2,5 | 3,1 | 3,7 |
| Weiterreißwiderstand | N/mm | 40 | 46 | 36 | 34 | 25 | 31 | 37 | 28 |

| | | | | | | | | | |
|---|---|---|---|---|---|---|---|---|---|
| ^{a} SSBR, NS612 Fa. Nippon Zeon, Tg -65°C, OH-Gruppen modifiziert ^{b} VN3, Fa. Evonik ^{c} Phenolharz, Koresin^{®}, Fa. BASF ^{d} Bis(triethoxysilylpropyl)disulfid (TESPD) | | | | | | | | | |

Aus der Tabelle wird ersichtlich, dass sich durch die Reduzierung des Füllstoffgehaltes und die Anhebung des Grades der Vernetzung (größere Mengen an Schwefel und Beschleuniger) die Rückprallelastizität bei 70 °C erhöht werden kann, was zu einem verringerten Rollwiderstand des Reifens mit einer solchen Base führt. Das Vorgehen der Reduzierung des Füllstoffgehaltes und der Anhebung der Vernetzung zeigt jedoch überraschenderweise keinen stetigen Verlauf, sondern hat ihre Grenzen. Sinkt beispielsweise der Füllstoffgehalt (Kieselsäure + Ruß) auf 20 phr wie in Mischung 8(V) kommt es zu einer Abnahme der Rückprallelastizität bei 70 °C, so dass sich ein optimaler Bereich für die Menge an Kieselsäure und Ruß ergibt, der zwischen 21 und 42 phr liegt.

Gleichzeitig ist darauf zu achten, dass die Rissbeständigkeit (strukturelle Haltbarkeit), für die die Reißenergie und die Reißfestigkeit als Indikatoren dienen, nicht schlechter wird. Dies ist ebenfalls nur bei den mit "E" gekennzeichneten Mischungen der Fall, wobei hier das Kieselsäure-zu-Ruß-Verhältnis von Bedeutung ist. Für die Rissbeständigkeit ist es weiterhin wichtig, dass der Anteil an Polyisopren möglichst hoch ist. Mischung 5(V) mit wenig Polyisopren zeigt ein deutlich schlechteres Rissverhalten.

Zusammenfassend lässt sich anhand Tabelle 1 feststellen, dass die mit "E" gekennzeichneten Mischungen durch die geringe Hysterese bei hoher struktureller Haltbarkeit bei Verwendung als Laufstreifenbase in einem Fahrzeugluftreifen zu einem Reifen mit geringem Rollwiderstand und hoher Haltbarkeit führen.

## Patentansprüche

1. Fahrzeugluftreifen mit einer Radialkarkasse, einem Gürtel und einem Laufstreifen, welcher sich in radialer Richtung aus zwei aus unterschiedlichen Gummimischungen bestehenden Schichten, einer Laufstreifencap und einer Laufstreifenbase, zusammensetzt, wobei die Laufstreifencap den mit der Fahrbahn in Berührung kommenden Teil des Laufstreifens darstellt und die Laufstreifenbase zwischen Laufstreifencap und Gürtel angeordnet ist,
**dadurch gekennzeichnet,**
**dass** die Laufstreifenbase auf einer Kautschukmischung basiert, die
- mehr als 70 phr natürliches und/oder synthetisches Polyisopren und
- 21 bis 42 phr Kieselsäure und Ruß in Summe enthält, wobei das Verhältnis von Kieselsäure zu Ruß größer als 1:1 ist,
- und zumindest ein Kupplungsagens zur Anbindung der Kieselsäure an den Kautschuk und
- 0,5 bis 10 phr zumindest eines Klebharzes aufweist.

2. Fahrzeugluftreifen nach Anspruch 1, **dadurch gekennzeichnet, dass** die Laufstreifenbase auf einer Kautschukmischung basiert, die mehr als 85 phr, vorzugsweise mehr als 95 phr, natürliches und/oder synthetisches Polyisopren enthält.

3. Fahrzeugluftreifen nach Anspruch 1 oder 2, **dadurch gekennzeichnet, dass** die Laufstreifenbase auf einer Kautschukmischung basiert, die als weiteren Kautschuk zumindest ein Polybutadien enthält.

4. Fahrzeugluftreifen nach einem der Ansprüche 1 bis 3, **dadurch gekennzeichnet, dass** das Verhältnis von Kieselsäure zu Ruß größer als 3:2, vorzugsweise größer als 4:1, ist.

5. Fahrzeugluftreifen nach einem der Ansprüche 1 bis 4, **dadurch gekennzeichnet, dass** der Ruß eine DBP-Zahl gemäß ASTM D 2414 von mehr als 80 cm³/100 g und eine Jodadsorptionszahl gemäß ASTM D 1510 von mehr als 60 g/kg aufweist.

6. Fahrzeugluftreifen nach einem der Ansprüche 1 bis 5, **dadurch gekennzeichnet, dass** die Laufstreifenbase auf einer Kautschukmischung basiert, die weniger als 10 phr , vorzugsweise weniger als 5 phr, Weichmacheröl und/oder Verarbeitungshilfsmittel enthält.

7. Fahrzeugluftreifen nach einem der Ansprüche 1 bis 6, **dadurch gekennzeichnet, dass** die Laufstreifenbase auf einer Kautschukmischung basiert, die 1 bis 4 phr zumindest eines Klebharzes enthält.

8. Fahrzeugluftreifen nach einem der Ansprüche 1 bis 7, **dadurch gekennzeichnet, dass** die Laufstreifenbase auf einer Kautschukmischung basiert, die mehr als 2,4 phr zumindest eines Vulkanisationsbeschleunigers enthält.

## Claims

1. Pneumatic tyre with a radial carcass, a belt and a tread which is composed in radial direction of two layers composed of different rubber mixtures, of a tread cap and of a tread base, where the tread cap is that part of the tread that comes into contact with the trafficway and the tread base is arranged between tread cap and belt,
**characterized in that**
the tread base is based on a rubber mixture comprising
- more than 70 phr of natural and/or synthetic polyisoprene and
- a total of from 21 to 42 phr of silica and carbon black, where the ratio of silica to carbon black is greater than 1:1,
- and at least one coupling agent for the coupling of the silica to the rubber
and
- from 0.5 to 10 phr of at least one adhesive resin.

2. Pneumatic tyre according to Claim 1, **characterized in that** the tread base is based on a rubber mixture which comprises more than 85 phr, preferably more than 95 phr, of natural and/or synthetic polyisoprene.

3. Pneumatic tyre according to Claim 1 or 2, **characterized in that** the tread base is based on a rubber mixture which comprises at least one polybutadiene as other rubber.

4. Pneumatic tyre according to any of Claims 1 to 3, **characterized in that** the ratio of silica to carbon black is greater than 3:2, preferably greater than 4:1.

5. Pneumatic tyre according to any of Claims 1 to 4, **characterized in that** the DBP number of the carbon black in accordance with ASTM D2414 is more than 80 cm³/100 g and its iodine adsorption number in accordance with ASTM D1510 is more than 60 g/kg.

6. Pneumatic tyre according to any of Claims 1 to 5, **characterized in that** the tread base is based on a rubber mixture which comprises less than 10 phr, preferably less than 5 phr, of plasticizer oil and/or processing aid.

7. Pneumatic tyre according to any of Claims 1 to 6, **characterized in that** the tread base is based on a rubber mixture which comprises from 1 to 4 phr of at least one adhesive resin.

8. Pneumatic tyre according to any of Claims 1 to 7, **characterized in that** the tread base is based on a rubber mixture which comprises more than 2.4 phr of at least one vulcanization accelerator.

## Revendications

1. Pneu de véhicule avec une carcasse radiale, une ceinture et une bande de roulement, qui se compose en direction radiale de deux couches constituées de mélanges de caoutchouc différents, d'une tête de bande de roulement et d'une base de bande de roulement, dans lequel la tête de bande de roulement représente la partie de la bande de roulement qui vient en contact avec la chaussée et la base de bande de roulement est disposée entre la tête de bande de roulement et la ceinture, **caractérisé en ce que** la base de bande de roulement est basée sur un mélange de caoutchouc, qui
- contient plus de 70 phr (parties en poids) de polyisoprène naturel et/ou synthétique et
- 21 à 42 phr de la somme d'acide silicique et de suie, le rapport de l'acide silicique à la suie étant supérieur à 1:1,
- et présente au moins un agent de couplage pour la liaison de l'acide silicique au caoutchouc, et
- 0,5 à 10 phr d'au moins une résine collante.

2. Pneu de véhicule selon la revendication 1, **caractérisé en ce que** la base de bande de roulement est basée sur un mélange de caoutchouc, qui contient plus de 85 phr, de préférence plus de 95 phr de polyisoprène naturel et/ou synthétique.

3. Pneu de véhicule selon la revendication 1 ou 2, **caractérisé en ce que** la base de bande de roulement est basée sur un mélange de caoutchouc, qui contient comme autre caoutchouc au moins un polybutadiène.

4. Pneu de véhicule selon l'une quelconque des revendications 1 à 3, **caractérisé en ce que** le rapport de l'acide silicique à la suie est supérieur à 3:2, de préférence supérieur à 4:1.

5. Pneu de véhicule selon l'une quelconque des revendications 1 à 4, **caractérisé en ce que** la suie présente un indice DBP selon ASTM D 2414 de plus de 80 cm³/100 g et un indice d'absorption d'iode selon ASTM D 1510 de plus de 60 g/kg.

6. Pneu de véhicule selon l'une quelconque des revendications 1 à 5, **caractérisé en ce que** la base de bande de roulement est basée sur un mélange de caoutchouc, qui contient moins de 10 phr, de préférence moins de 5 phr, d'huile de plastification et/ou d'adjuvant de traitement.

7. Pneu de véhicule selon l'une quelconque des revendications 1 à 6, **caractérisé en ce que** la base de bande de roulement est basée sur un mélange de caoutchouc, qui contient 1 à 4 phr d'au moins une résine collante.

8. Pneu de véhicule selon l'une quelconque des revendications 1 à 7, **caractérisé en ce que** la base de bande de roulement est basée sur un mélange de caoutchouc, qui contient plus de 2,4 phr d'au moins un accélérateur de vulcanisation.
